Europäisches Patentamt

European Patent Office

Office européen des brevets

(11) Publication number: **0 270 328**
**A2**

# EUROPEAN PATENT APPLICATION

(21) Application number: 87310538.1

(22) Date of filing: 30.11.87

(51) Int. Cl.4: **B62D 33/04** , B60P 7/08

(30) Priority: 01.12.86 GB 8628650

(43) Date of publication of application:
08.06.88 Bulletin 88/23

(84) Designated Contracting States:
BE DE FR GB IT NL

(71) Applicant: YORK TRAILER COMPANY LIMITED
Yafforth Road
Northallerton North Yorkshire, DL7 8UE(GB)

(72) Inventor: McCullagh, Frank
55 Bentinck Road
Stockton-on-Tees Cleveland(GB)

(74) Representative: Allen, Oliver John Richard et
al
Lloyd Wise, Tregear & Co. Norman House
105-109 Strand
London, WC2R 0AE(GB)

(54) Improvements in and relating to a cant rail.

(57) A cant rail for a trailer or semi-trailer or the like
which is an integrally formed unit formed with mem-
bers which form at least part of attachment means
for a load being carried in the trailer. Thus at least
part of the load attachment means can be extruded
as part of the cant rail and avoids the necessity of
having to connect separate members.

EP 0 270 328 A2

## IMPROVEMENTS IN AND RELATING TO A CANT RAIL.

This invention relates to cant rails for trailers or semi-trailers.

Known cant rails which extend along the upper or lower side of a trailer or semi-trailer are very simple in design and construction. The upper rail is used to support a roof.

In accordance with the present invention, a cant rail is integrally formed with members which form at least part of attachment means for a load being carried in the trailer.

Such a cant rail has the advantage that at least part of load attachment means can be extruded as part of the cant rail ready for use when necessary.

Suitably said members form guide and retaining means for a load attachment member. Preferably lower and upper guide/retaining means are provided, the former being integral with the side flange of the cant rail, and the latter being integral with the upper flange of the cant rail.

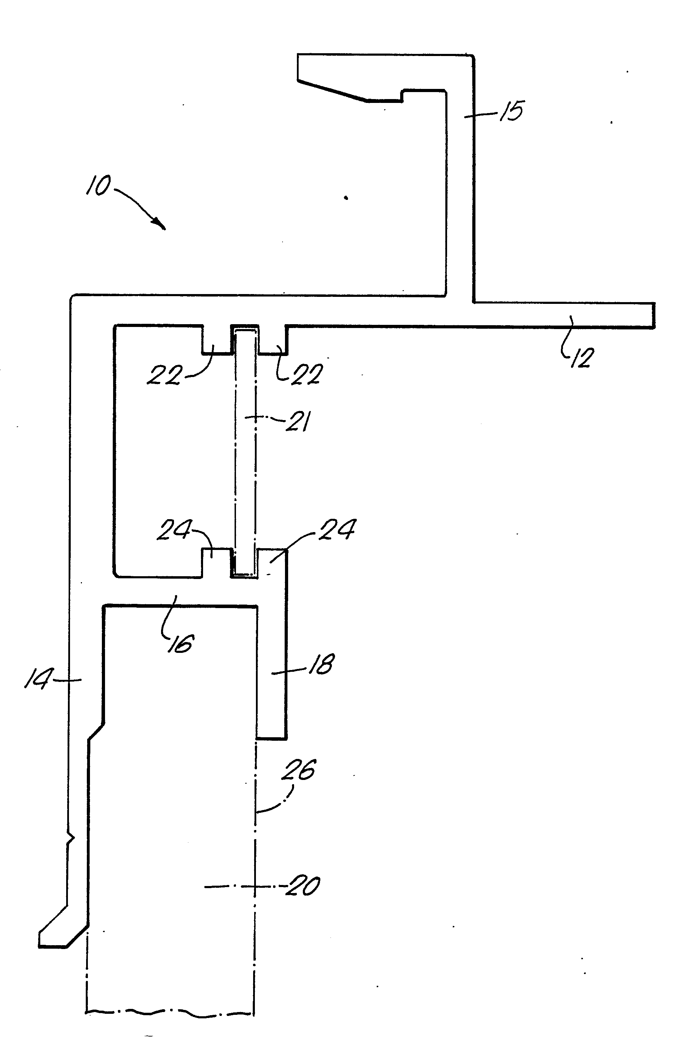

The invention will now be described by way of example with reference to the accompanying drawing, which shows a cross-sectional side view of a cant rail in accordance with the present invention.

In the drawing, a cant rail 10 for the upper side edge of a van body or trailer is shown having an upper horizontal flange portion 12 connected at right angles to a side "vertical" flange portion 14.

The upper flange portion 12 of the cant rail is connected and integral with roof attachment means 16 which are described in detail in our co-pending Application No. .The side flange 14 is connected and integral with a horizontal flange member 16, which in turn is connected and integral with a vertical flange member 18 spaced from the flange 14. The flange members 16 and 18, together with the top part of the side flange portion 14, contain the top end of a side wall 20 of the trailer.

Load attachment means are provided between the angle of the upper and side flange portions 12 and 14. The attachment means comprising a load attachment track member 20 provided with a plurality of apertures (not shown) along the length thereof, and upper and lower guide members 22 and 24 for retaining the attachment member 20. The arrangement is such that the attachment member 20 can be simply slid between the guide members 22 and 24 when necessary, or alternatively left therebetween at all times.

The lower guide members 24 are integral with the flange member 16 which is itself integral with the side flange portion 14, while the upper guide members 22 are integral with the upper flange portion 12. The guide members 22 and 24 are in consequence integrally formed with the cant rail 10. The arrangment is such that the cant rail is extruded with integral guide members.

It will be noted that the attachment member 20 is arranged so that it does not extend beyond the inner surface 26 of the side wall 20 of the trailer. This provides the advantage that the attachment member 20 and any attachment hooks (not shown) connected thereto, do not protrude within the load space area of the trailer.

### Claims

1. A trailer or semi-trailer having a cant rail which is integrally formed with members which form at least part of attachment means for a load being carried in the trailer.

2. A trailer or semi-trailer as claimed in Claim 1 in which the said members form guide and retaining means for a load attachment member.

3. A trailer or semi-trailer as claimed in Claim 2 in which lower and upper guide/retaining means are provided, the lower being integral with the side flanges of the cant rail and the upper being integral with the upper flange of the cant rail.

4. A cant rail for a trailer as claimed in any one of Claims 1 to 4 having integrally formed upper and lower guide/retaining means for a load attachment member, the upper means being integral with the upper flange of the cant rail and directed towards the lower means which are integral with the said flange of the cant rail.

5. A cant rail for a trailer or semi-trailer substantially as hereinbefore described with reference to the accompanying drawing.

10

15

12

22  22

21

24  24

16

14

18

26

20